# EUROPEAN PATENT APPLICATION

(11) **EP 4 460 079 A1**
(43) Date of publication of application: **06.11.2024**
(21) Application number: 22914973.7
(22) Date of filing: 28.12.2022
(51) Int. Cl.: H04W 28/02

(54) **COOPERATIVE COMMUNICATION METHOD AND APPARATUS, AND COMPUTER-READABLE STORAGE MEDIUM**

(30) Priority: 31.12.2021 CN 202111680053
(71) Applicant: Spreadtrum Communications (Shanghai) Co., Ltd., Shanghai 201203 (CN)
(72) Inventor: HAN, Lifeng, Shanghai 201203 (CN)
(74) Representative: Nordmeyer, Philipp Werner
(86) International application number: PCT/CN2022/143029
(87) International publication number: WO 2023/125723

(57) **Abstract**

A cooperative communication method and apparatus, and a computer-readable storage medium. The cooperative communication method comprises: receiving cooperative bearer configuration information, wherein the cooperative bearer configuration information is used for indicating a configuration corresponding to cooperative data borne by a target cooperative user equipment; and according to the cooperative bearer configuration information, cooperating with the target cooperative user equipment, so as to communicate with an access network device. The solution can achieve cooperation between a master user equipment and a cooperative user equipment, such that cooperative transmission can be performed.

## Description

### CROSS-REFERENCE TO RELATED APPLICATIONS

This application claims priority to Chinese Patent Application No. 202111680053.9, filed on December 31, 2021, and entitled "COLLABORATIVE COMMUNICATION METHOD AND APPARATUS, AND COMPUTER-READABLE STORAGE MEDIUM", the entire disclosure of which is incorporated herein by reference.

### TECHNICAL FIELD

The present disclosure generally relates to radio communication technology field, and more particularly, to a collaborative communication method and apparatus, and a computer-readable storage medium.

### BACKGROUND

In radio communication systems, an uplink data transmission rate is limited due to a transmission power limitation of User Equipment (UE).

In order to increase the data transmission rate, a collaborative UE is usually adopted to assist in data transmission. A UE that performs data transmission is called a master UE, and a UE that assists the master UE in data transmission is called a collaborative UE. Data transmission and reception of the master UE can be partially completed by the collaborative UE.

However, there is no existing implementation solution for how the master UE and the collaborative UE cooperate to perform data transmission.

### SUMMARY

Embodiments of the present disclosure provide a collaborative communication method to achieve cooperation between a master UE and a collaborative UE to perform collaborative transmission.

In an embodiment of the present disclosure, a collaborative communication method is provided, including: receiving collaborative bearer configuration information, where the collaborative bearer configuration information indicates a configuration for a target collaborative UE bearing collaborative data; and collaborating with the target collaborative UE based on the collaborative bearer configuration information to communicate with an access network device.

Optionally, said receiving the collaborative bearer configuration information includes: receiving the collaborative bearer configuration information sent by the access network device; and/or receiving the collaborative bearer configuration information forwarded by the target collaborative UE, where the collaborative bearer configuration information is sent from the access network device to the target collaborative UE.

Optionally, said collaborating with the target collaborative UE based on the collaborative bearer configuration information to communicate with the access network device includes: for uplink data transmission, transmitting uplink collaborative data to the target collaborative UE based on the collaborative bearer configuration information, where the target collaborative UE transmits the uplink collaborative data; and for downlink data reception, receiving downlink non-collaborative data sent by the access network device and receiving downlink collaborative data sent by the target collaborative UE based on the collaborative bearer configuration information, where the downlink collaborative data is delivered from the access network device to the target collaborative UE.

Optionally, the collaborative bearer configuration information includes at least one of the following: an identity of a collaborative bearer; a master bearer corresponding to the collaborative bearer; identity information of the target collaborative UE; identity information of a master UE; or a data direction for collaborative transmission.

Optionally, prior to said receiving the collaborative bearer configuration information, the method further includes: reporting auxiliary information, where the auxiliary information is used to request collaborative transmission and generate the collaborative bearer configuration information.

Optionally, said reporting the auxiliary information includes: reporting the auxiliary information to the access network device; and/or, transmitting the auxiliary information to the target collaborative UE, where the auxiliary information is reported to the access network device by the target collaborative UE.

Optionally, the auxiliary information includes at least one of the following: a collaborative data transmission request; an identity of a service for requesting collaborative transmission; a service quality parameter of data for requesting collaborative transmission; or a direction of data for requesting collaborative transmission.

Optionally, the method further includes: determining the target collaborative UE.

Optionally, said determining the target collaborative UE includes: acquiring candidate collaborative UEs; and selecting the target collaborative UE from the candidate collaborative UEs.

Optionally, following determining the target collaborative UE, the method further includes: transmitting identity information of the target collaborative UE to the access network device.

Optionally, said selecting the target collaborative UE from the candidate collaborative UEs includes: selecting a candidate collaborative UE whose signal quality reaches a preset threshold as the target collaborative UE; and/or, selecting a candidate collaborative UE whose current load is lower than a preset load value as the target collaborative UE.

Optionally, said acquiring the candidate collaborative UEs includes: receiving identity information of the candidate collaborative UEs from a core network device.

In an embodiment of the present disclosure, a collaborative communication method is provided, including: delivering collaborative bearer configuration information to make a master UE perform collaborative communication with a target collaborative UE based on the collaborative bearer configuration information to send and receive collaborative data, where the collaborative bearer configuration information indicates a configuration for the target collaborative UE bearing collaborative data.

Optionally, said delivering collaborative bearer configuration information includes: delivering the collaborative bearer configuration information to the master UE; and/or, transmitting the collaborative bearer configuration information to the target collaborative UE, where the collaborative bearer configuration information is transmitted to the master UE by the target collaborative UE.

Optionally, the collaborative bearer configuration information includes at least one of the following: an identity of a collaborative bearer; a master bearer corresponding to the collaborative bearer; identity information of the target collaborative UE; identity information of the master UE; or a data direction for collaborative transmission.

Optionally, prior to said delivering the collaborative bearer configuration information, the method further includes: receiving auxiliary information; and receiving the collaborative bearer configuration information corresponding to the auxiliary information.

Optionally, said receiving the auxiliary information includes: receiving the auxiliary information reported by the master UE; and/or, receiving the auxiliary information reported by the target collaborative UE.

Optionally, the auxiliary information includes at least one of the following: a collaborative data transmission request; an identity of a service for requesting collaborative transmission; a service quality parameter of data for requesting collaborative transmission; or a direction of data for requesting collaborative transmission.

Optionally, the method further includes: determining the target collaborative UE.

Optionally, said determining the target collaborative UE includes: acquiring candidate collaborative UEs; and selecting the target collaborative UE from the candidate collaborative UEs.

Optionally, said selecting the target collaborative UE from the candidate collaborative UEs includes: selecting a candidate collaborative UE whose signal quality reaches a preset threshold as the target collaborative UE; and/or, selecting a candidate collaborative UE whose current load is lower than a preset load value as the target collaborative UE.

Optionally, said acquiring the candidate collaborative UEs includes: receiving identity information of the candidate collaborative UEs from a core network device.

In an embodiment of the present disclosure, a collaborative communication apparatus is provided, including: a reception circuitry configured to receive collaborative bearer configuration information, where the collaborative bearer configuration information indicates a configuration for a target collaborative UE bearing collaborative data; and a collaborative communication circuitry configured to collaborate with the target collaborative UE based on the collaborative bearer configuration information to communicate with an access network device.

In an embodiment of the present disclosure, a collaborative communication apparatus is provided, including: a delivering circuitry configured to deliver collaborative bearer configuration information to make a master UE perform collaborative communication with a target collaborative UE based on the collaborative bearer configuration information to send and receive collaborative data, where the collaborative bearer configuration information indicates a configuration for the target collaborative UE bearing collaborative data.

In an embodiment of the present disclosure, a non-volatile or non-transitory computer-readable storage medium having computer instructions stored therein is provided, where when the computer instructions are executed by a processor, any one of the above collaborative communication methods is performed.

In an embodiment of the present disclosure, a collaborative communication apparatus including a memory and a processor is provided, where the memory has computer instructions stored therein, and when the processor executes the computer instructions, any one of the above collaborative communication methods is performed.

Embodiments of the present disclosure may provide following advantages.

The collaborative bearer configuration information is received, which enables the master UE to perform collaborative communication with the target collaborative UE, thereby realizing sending and receiving of collaborative data and improving a data transmission rate.

### BRIEF DESCRIPTION OF THE DRAWINGS

FIG. 1 is a flow chart of a collaborative communication method according to an embodiment;
FIG. 2 is a diagram of a network structure according to an embodiment;
FIG. 3 is a flow chart of a collaborative communication method according to an embodiment;
FIG. 4 is a block diagram of a collaborative communication apparatus according to an embodiment; and
FIG. 5 is a block diagram of a collaborative communication apparatus according to an embodiment.

### DETAILED DESCRIPTION

There is no existing implementation solution for how a master UE and a collaborative UE to perform collaborative transmission.

In embodiments of the present disclosure, collaborative bearer configuration information is received, which enables a master UE to perform collaborative communication with a target collaborative UE, thereby realizing sending and receiving of collaborative data and improving a data transmission rate.

In order to clarify the objects, characteristics and advantages of the disclosure, embodiments of present disclosure will be described in detail in conjunction with accompanying drawings.

A UE in the embodiments of the present disclosure is a device with radio communication functions, which may be a terminal, a Mobile Station (MS), Mobile Terminal (MT)), an access terminal device, a vehicle-mounted terminal device, an industrial control terminal device, a UE unit, a UE station, a mobile station, a remote station, a remote terminal device, a mobile device, a UE terminal device, a wireless communication device, a UE agent or a UE device. The UE may be fixed or mobile. It should be noted that the UE may support at least one radio communication technology, such as Long Term Evolution (LTE) or New Radio (NR). For example, the UE may be a mobile phone, a pad, a desktop computer, a laptop computer, an all-in-one computer, a vehicular terminal, a Virtual Reality (VR) UE device, an Augmented Reality (AR) terminal device, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, a cellular phone, a cordless phone, a Session Initiation Protocol (SIP) telephone, Wireless Local Loop (WLL) station, a Personal Digital Assistant (PDA), a handheld device with radio communication functions, a computing device or other processing devices connected to a wireless modem, a wearable device, a terminal device in future mobile communication networks, or a terminal device in a future evolved Public Land Mobile Networks (PLMN). In some embodiments, the UE may be a device with transceiver functions, such as a chip system, where the chip system may include chips and may also include other discrete devices.

An access network device in the embodiments of the present disclosure is a device that provides radio communication functions for terminals, and may also be called a Radio Access Network (RAN) device or an access network element. The access network device can support at least one radio communication technology, such as LTE or NR. For example, the access network device includes but is not limited to next-generation node B (gNB), evolved node B (eNB), Radio Network Controller (RNC), node B (NB), Base Station Controller (BSC), Base Transceiver Station (BTS), home node B (for example, home evolved node B or home node B (HNB)), Baseband Unit (BBU), Transmission and Reception Point (TRP), Transmitting Point (TP), mobile switching center, etc. in 5th-generation (5G) mobile communication systems. The access network device may also be a wireless controller, a Centralized Unit (CU), and/or a Distributed Unit (DU) in a Cloud Radio Access Network (CRAN) scenario. Or the network device may be a relay station, an access point, a vehicular device, a terminal device, a wearable device or a network device in future mobile communications or in future evolved PLMNs. In some embodiments, the access network device may also be a device with a radio communication function for a terminal device, such as a chip system. For example, the chip system may include chips, and may also include other discrete devices.

In some embodiments, the access network device may also communicate with an Internet Protocol (IP) network, such as the Internet, a private IP network or other data networks.

In the embodiments of the present disclosure, a core network may be composed of core network elements. The core network element can also be called a core network device, which is a network element deployed in the core network, such as a core network control plane network element or a core network user plane network element. In the embodiments of the present disclosure, the core network may be an Evolved Packet Core (EPC), 5G Core Network or a new core network in future communication systems. The 5G Core Network is composed of a set of devices, implements Access and Mobility Management Function (AMF) providing functions such as mobility management function, User Plane Function (UPF) providing functions such as packet routing and forwarding and Quality of Service (QoS) management, and Session Management Function (SMF) providing functions such as session management and IP address allocation and management. EPC can be composed of MME that provides functions such as mobility management and gateway selection, Serving Gateway (S-GW) that provides functions such as data packet forwarding, and PDN Gateway (P-GW) that provides functions such as terminal address allocation and rate control. For an MBS traffic, the core network may include several new network elements to implement functions such as packet forwarding, MBS session management, QoS management, and transmission mode switching (switching between unicast and multicast/broadcast transmission modes). Another way is that the functionality may be implemented by network elements in an existing core network.

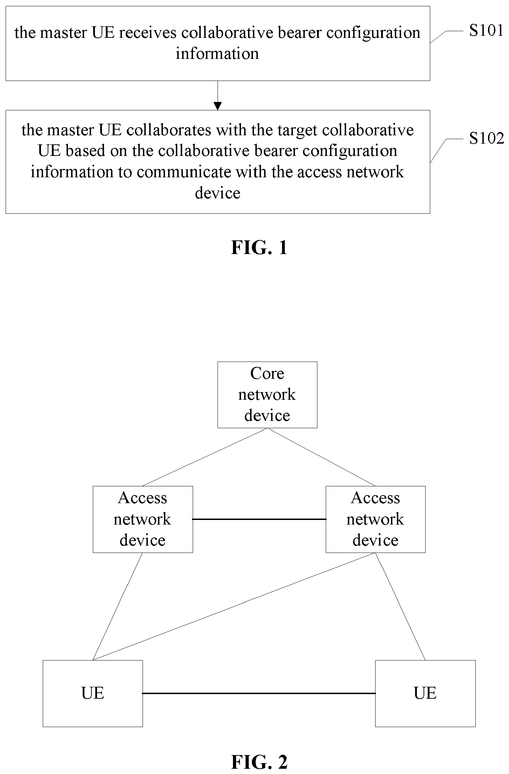

An embodiment of the present disclosure provides a collaborative communication method. Referring to FIG. 1, the method in the present disclosure may be applied to 4G communication systems, 5G communication systems, and various evolved communication systems in the future, such as 6G and 7G communication systems. The method in the present disclosure may be applied to different network architectures, including but not limited to a land communication network architecture, a non-land communication network architecture, a relay network architecture, a dual-link architecture, and a vehicle-to-everything architecture.

Referring to FIG. 2, FIG. 2 is a diagram of a network structure according to an embodiment, which corresponds to an application scenario of a collaborative communication method provided in an embodiment of the present disclosure.

An interface between a UE and an access network device is an air interface. A UE can be connected to one or more access network devices, and an access network device can be connected to and manage multiple UEs. In FIG. 2, when a UE is transmitting data, another UE may be selected as a collaborative UE to perform collaborative communication.

There is an interface between access network devices, which may be an X2 interface (corresponding to a 4G communication system), an Xn interface (corresponding to a 5G communication system), or other types of interfaces.

There is an interface between an access network device and a core network device, which may be an S 1 interface (corresponding to the 4G communication system), an NG interface (corresponding to the 5G communication system), or other types of interfaces.

In some embodiments, the method including S101 and S102 may be performed by a chip with a data processing function in a master UE, or by a chip module containing a chip with a data processing function in a master UE.

In S101, the master UE receives collaborative bearer configuration information.

In some embodiments, a master UE may receive the collaborative bearer configuration information from an access network device. The collaborative bearer configuration information indicates a configuration for a target collaborative UE bearing collaborative data. Alternatively, the master UE may receive the collaborative bearer configuration information forwarded by the target collaborative UE, where the collaborative bearer configuration information is delivered by the access network device to the target collaborative UE.

In some embodiments, the collaborative bearer configuration information may be generated by the access network device. Alternatively, the collaborative bearer configuration information may be generated by a core network device and delivered to the access network device by the core network device. The access network device delivers the received collaborative bearer configuration information to the master UE and/or the target collaborative UE.

In some embodiments, the collaborative bearer configuration information includes at least one of the following: an identity of a collaborative bearer; a master bearer corresponding to the collaborative bearer; identity information of the target collaborative UE; identity information of a master UE; or a data direction for collaborative transmission.

The identity of the collaborative bearer may be an ID of a Data Radio Bearer (DRB), an ID of a Logic Channel (LCH), an ID of a QoS flow, etc., to identify the collaborative bearer.

The master bearer corresponding to the collaborative bearer may refer to a master bearer of data required to be collaboratively transmitted by the master UE. Data in the master bearer includes collaborative data which is transmitted by the target collaborative UE.

The identity of the target collaborative UE may be used to characterize the target collaborative UE. The identity of the target collaborative UE may be a C-RNTI corresponding to the target collaborative UE, or may be other identities that can characterize the target collaborative UE.

Accordingly, the identity of the master UE may be used to characterize the master UE. The identity of the master UE may be a C-RNTI corresponding to the master UE, or may be other identities that can characterize the master UE.

The data direction of the collaborative transmission may be uplink, downlink, or both uplink and downlink.

In practice, uplink communication can also be called uplink transmission, which refers to unidirectional communication from the UE to the access network device. A communication link used for uplink communication is uplink, data transmitted on the uplink is uplink data, and a transmission direction of uplink data is an uplink direction.

Accordingly, downlink communication can also be called downlink transmission, which refers to unidirectional communication from the access network device to the LTE. A communication link used for uplink communication is downlink, data transmitted on the downlink is downlink data, and a transmission direction of downlink data is a downlink direction.

In S102, the master UE collaborates with the target collaborative UE based on the collaborative bearer configuration information to communicate with the access network device.

In some embodiments, In the embodiments of the present disclosure, when performing uplink data transmission, the master UE may classify uplink data into uplink collaborative data and uplink non-collaborative data based on the received collaborative bearer configuration information. The master UE may transmit the uplink collaborative data to the target collaborative UE, and the target collaborative UE transmits the uplink collaborative data to the access network device. The master UE may further directly transmit the uplink non-collaborative data to the access network device. The access network device may transmit the received uplink collaborative data and uplink non-collaborative data to the core network device.

When receiving downlink data, the master UE may receive downlink non-collaborative data sent by the access network device and receive downlink collaborative data sent by the target collaborative UE based on the received collaborative bearer configuration information. The downlink collaborative data is delivered to the target collaborative UE by the access network device.

For example, when the master UE A communicates with the access network device, the master UE A classifies the uplink data 0 into uplink non-collaborative data 1 and uplink collaborative data 2. The master UE A transmits the uplink non-collaborative data 1 to the access network device, and transmits the uplink collaborative data 2 to the target collaborative UE B. The target collaborative UE B transmits the uplink collaborative data 2 to the access network device. The access network device transmits the uplink non-collaborative data 1 and the uplink collaborative data 2 to the core network device. The core network device transmits downlink non-collaborative data 1' and downlink collaborative data 2' to the access network device. The access network device transmits the downlink non-collaborative data 1' to the master UE A, and transmits the downlink collaborative data 2' to the target collaborative UE B. The target collaborative UE transmits the downlink collaborative data 2' to the master UE A. In this case, the master UE A receives the downlink non-collaborative data 1' and the downlink collaborative data 2'.

In some embodiments, prior to said receiving the collaborative bearer configuration information, the master UE may further report auxiliary information, where the auxiliary information is used to request collaborative transmission. The master UE may report the auxiliary information to the access network device and then the access network device reports the auxiliary information to the core network device. After receiving the auxiliary information, the core network device may generate the collaborative bearer configuration information corresponding to the auxiliary information.

The master UE may directly communicate with the access network device to report the auxiliary information to the access network device. The master UE may also send the auxiliary information to the target collaborative UE, and the target collaborative UE reports the auxiliary information to the access network device. The master UE may report the auxiliary information to the access network device and transmit the auxiliary information to the target collaborative UE. In this case, the access network device can receive the auxiliary information sent by the master UE and the auxiliary information sent by the target collaborative UE.

In some embodiments, the auxiliary information includes at least one of the following: a collaborative data transmission request; an identity of a service for requesting collaborative transmission; a service quality parameter of data for requesting collaborative transmission; or a direction of data for requesting collaborative transmission.

The collaborative data transmission request may be used to indicate requesting for collaborative data transmission. In some embodiments, the collaborative data transmission request may be indicated by a message name of a preset second message. For example, the message name of the preset second message is collaborative data transmission request information.

The identity of the service for requesting collaborative transmission may be an ID of a DRB, an ID of an LCH, an ID of a QoS flow, etc.

The service quality parameter of data for requesting collaborative transmission may include any one or more of the following: UE Aggregate Maximum Bit Rate, PDU Session Aggregate Maximum Bit Rate, uplink and/or downlink maximum rate, uplink and/or downlink guaranteed rate, uplink and/or downlink maximum packet loss rate, priority, 5QI, Delay Critical (whether it is sensitive to delay), etc.

The direction of data for requesting collaborative transmission may be uplink, downlink, or uplink and downlink.

In some embodiments, if the master UE reports the auxiliary information, the master UE may transmit the auxiliary information to the access network device via the second message. The second message may be a Radio Resource Control (RRC) message, a Media Access Control (MAC) Control Element (CE), or Uplink Control Information (UCI).

If the target collaborative UE reports the auxiliary information, the target collaborative UE may transmit the auxiliary information to the access network device via a third message. The third message may be an RRC message, a MAC CE or UCI.

In some embodiments, before the master UE reports the auxiliary information, or before the access network device delivers the collaborative bearer configuration information, the target collaborative UE may be determined.

In some embodiments, the master UE may first determine candidate collaborative UEs, and then select the target collaborative UE from the candidate collaborative UEs.

A candidate collaborative UE whose signal quality reaches a preset threshold may be selected as the target collaborative UE; or a candidate collaborative UE whose current load is lower than a preset load value may be selected as the target collaborative UE; or a candidate collaborative UE whose signal quality reaches the preset threshold and current load is lower than the preset load value may be selected as the target collaborative UE. The signal quality refers to signal quality between the candidate collaborative UE and the master UE.

In some embodiments, the master UE may select a candidate collaborative UE having highest signal quality as the target collaborative UE, or select a candidate collaborative UE having a lowest current load as the target collaborative UE, or select a candidate collaborative UE having the highest signal quality and the lowest current load as the target collaborative UE.

In some embodiments, the core network device may transmit collaborative UE information to the master UE. The collaborative UE information indicates identity information of the candidate collaborative UEs. The identity information of the candidate collaborative UEs may be 5G-TMSI, or may be other information that can characterize the candidate collaborative UEs.

The candidate collaborative UEs corresponding to the collaborative UE information may be selectable collaborative UEs corresponding to a collaborative service. The collaborative service may refer to one or more services where data transmission is performed in a collaborative manner.

After receiving the collaborative UE information, the master UE may select one or more candidate collaborative UEs as the target collaborative UE based on the above-mentioned preset conditions. After determining the target collaborative UE, the master UE may report the identity information of the target collaborative UE to the access network device. The identity information of the target collaborative UE may be 5G-TMSI information of the target collaborative UE, or C-RNTI information of the target collaborative UE, etc.

For example, after receiving the collaborative UE information, the master UE selects the candidate collaborative UE 1 as the target collaborative UE. The master UE transmits the identity " 1" of the candidate collaborative UE 1 to the access network device.

In some embodiments, the master UE may transmit the identity information of the target collaborative UE to the access network device via a first message. The first message may be an RRC message, a MAC CE, or UCI.

In some embodiments, there is an application scenario where the master UE does not receive the collaborative UE information sent by the core network device. In this case, the master UE may select other UEs as the target collaborative UE, where the other UEs may be UEs geographically adjacent to the master UE.

From above, receiving the collaborative bearer configuration information enables the master UE to perform collaborative communication with the target collaborative UE, thereby realizing sending and receiving of collaborative data and improving a data transmission rate.

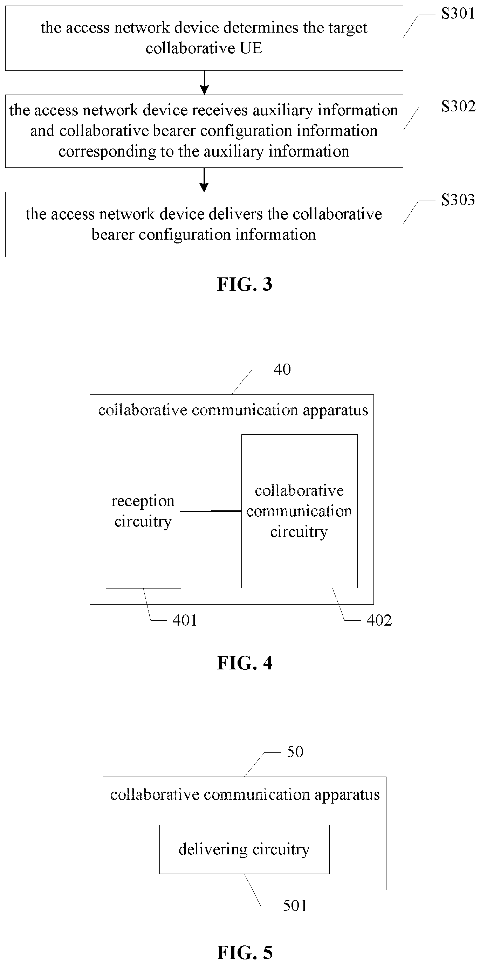

An embodiment of the present disclosure provides another collaborative communication method. Referring to FIG. 3, the method is described in detail below through specific steps.

In some embodiments, the collaborative communication method corresponding to following steps S301 to S303 may be performed by an access network device.

In S303, the access network device delivers collaborative bearer configuration information.

In some embodiments, the access network device may deliver collaborative bearer configuration information which indicates a configuration for a target collaborative UE bearing collaborative data. The collaborative bearer configuration information may be generated by the access network device, or may come from a core network device.

In some embodiments, the access network device may directly deliver the collaborative bearer configuration information to a master UE. Alternatively, the access network device may deliver the collaborative bearer configuration information to the target collaborative UE, and the target collaborative UE transmits the collaborative bearer configuration information to the master UE.

Alternatively, the access network device may transmit the collaborative bearer configuration information to the master UE and the target collaborative UE respectively. After receiving the collaborative bearer configuration information, the target collaborative UE transmits the received collaborative bearer configuration information to the master UE to improve reliability of data transmission.

In some embodiments, content included in the collaborative bearer configuration information may correspond to the embodiment including the above steps S101 and S102, and is not repeated here. In addition, actions performed by the master UE after receiving the collaborative bearer configuration information may also correspond to S102.

In some embodiments, the access network device may further perform S302 before S303.

In S302, the access network device receives auxiliary information and collaborative bearer configuration information corresponding to the auxiliary information.

In some embodiments, the master UE may directly communicate with the access network device to report the auxiliary information to the access network device. Alternatively, the master UE may transmit the auxiliary information to the target collaborative UE, and the target collaborative UE reports the auxiliary information to the access network device. Alternatively, the master UE may report the auxiliary information to the access network device, and transmit the auxiliary information to the target collaborative UE. In this case, the access network device can receive the auxiliary information sent by the master UE and the target collaborative UE. After receiving the auxiliary information, the access network device may report the auxiliary information to the core network device.

In some embodiments, the core network device or the access network device may accordingly generate the collaborative bearer configuration information based on the received auxiliary information. If the core network device generates the collaborative bearer configuration information, the core network device may transmit the generated collaborative bearer configuration information to the access network device.

Content included in the auxiliary information may be referred to the above embodiments, and is not repeated here.

In some embodiments, before S302, the access network device may further perform S301.

In S301, the access network device determines the target collaborative UE.

In some embodiments, the access network device may first determine candidate collaborative UEs, and select the target collaborative UE from the candidate collaborative UEs based on a preset second condition.

In some embodiments, a candidate collaborative UE whose signal quality reaches a preset threshold may be selected as the target collaborative UE; or a candidate collaborative UE whose current load is lower than a preset load value may be selected as the target collaborative UE; or a candidate collaborative UE whose signal quality reaches the preset threshold and current load is lower than the preset load value may be selected as the target collaborative UE. The signal quality refers to signal quality between the candidate collaborative UE and the master UE.

In some embodiments, the access network device may select a candidate collaborative UE having highest signal quality as the target collaborative UE, or select a candidate collaborative UE having a lowest current load as the target collaborative UE, or select a candidate collaborative UE having the highest signal quality and the lowest current load as the target collaborative UE.

In some embodiments, the core network device may transmit collaborative UE information to the access network device, and the access network device determines the candidate collaborative UEs based on the received collaborative UE information. The collaborative UE information indicates identity information of the candidate collaborative UEs. The identity information of the candidate collaborative UEs may be 5G-TMSI, or may be other information that can characterize the candidate collaborative UEs.

The candidate collaborative UEs corresponding to the collaborative UE information may be selectable collaborative UEs corresponding to a collaborative service. The collaborative service may refer to one or more services where data transmission is performed in a collaborative manner.

By receiving information from the core network device, the access network device can determine the target collaborative UE used for collaborative communication.

Referring to FIG. 4, FIG. 4 is a block diagram of a collaborative communication apparatus 40 according to an embodiment. The apparatus 40 includes a reception circuitry 401 and a collaborative communication circuitry 402.

The reception circuitry 401 is configured to receive collaborative bearer configuration information, where the collaborative bearer configuration information indicates a configuration for a target collaborative UE bearing collaborative data.

The collaborative communication circuitry 402 is configured to collaborate with the target collaborative UE based on the collaborative bearer configuration information to communicate with an access network device.

In some embodiments, a detailed implementing process of the reception circuitry 401 and the collaborative communication circuitry 402 may be referred to S101 and S102, and is not repeated here.

Referring to FIG. 5, FIG. 5 is a block diagram of a collaborative communication apparatus 50 according to an embodiment. The apparatus 50 includes a delivering circuitry 501.

The delivering circuitry 501 is configured to deliver collaborative bearer configuration information to make a master UE perform collaborative communication with a target collaborative UE based on the collaborative bearer configuration information to send and receive collaborative data, where the collaborative bearer configuration information indicates a configuration for the target collaborative UE bearing collaborative data.

In some embodiments, a detailed implementing process of the delivering circuitry 501 may be referred to S301, and is not repeated here.

In an embodiment of the present disclosure, a non-volatile or non-transitory computer-readable storage medium having computer instructions stored therein is provided, where when the computer instructions are executed by a processor, any one of the collaborative communication methods provided in the above embodiments is performed.

In an embodiment of the present disclosure, a collaborative communication apparatus including a memory and a processor is provided, where the memory has computer instructions stored therein, and when the processor executes the computer instructions, any one of the collaborative communication methods provided in the above embodiments is performed.

It should be noted that, for the aforementioned method embodiments, for the sake of simplicity, the methods are all expressed as combinations of a series of actions, but those skilled in the art should be aware that the present disclosure is not limited by an order of the actions described, as according to the present disclosure, some steps can be performed in other orders or simultaneously. In addition, those skilled in the art should also be aware that the embodiments described in the disclosure are all preferred embodiments, and the actions and modules involved are not necessarily required by the present disclosure.

In the above embodiments, the description of each embodiment has its own emphasis. Parts that are not described in detail in a certain embodiment may be referred to the relevant descriptions of other embodiments.

During an implementation process, each step of the above methods may be completed through an integrated logic circuit of hardware in the processor or instructions in a form of software. The steps of the methods disclosed in conjunction with the embodiments of the present disclosure may be directly performed by a hardware processor, or may be performed by a combination of hardware and software units in the processor. The software unit may be located in a random access memory, a flash memory, a read-only memory, a programmable read-only memory or electrically erasable programmable memory, a register or other mature storage media in the art. The storage medium is located in the memory, and the processor executes instructions in the memory and completes the steps of the above methods in combination with its hardware. To avoid repetition, it is not described in detail here.

In the embodiments of the present disclosure, the processor may be a Central Processing Unit (CPU), or other general processors, Digital Signal Processors (DSPs), Application Specific Integrated Circuits (ASICs), Field Programmable Gate Arrays (FPGAs) or other Programmable logic devices, discrete gates or transistor logic devices, discrete hardware components, and the like. A general processor may be a microprocessor or the processor may be any conventional processor or the like.

An embodiment of the present disclosure further provides a computer program product including a non-transitory computer-readable storage medium in which a computer program is stored, where the computer program is configured to enable a computer to perform some or all of the steps in any one of the methods described in the above method embodiments. The computer program product may be a software installation package.

In the above embodiments of the present disclosure, it should be understood that the disclosed method, device and system may be implemented in other ways. For example, the above device embodiments are merely illustrative, and for example, division of units is merely one logical division, and other divisions may be realized in practice, for example, a plurality of units or components may be combined or integrated into another system, or some features may be omitted, or not executed. Further, the shown or discussed mutual coupling or direct coupling or communication connection may be an indirect coupling or communication connection via some interfaces, devices or units, and may be in an electrical, mechanical or other form.

The units described as separate parts may or may not be physically separate, and parts shown as units may or may not be physical units, that is, may be disposed in one place, or may be distributed on a plurality of network units. Some or all of the units can be selected according to practical requirements to achieve the purpose of the solutions of the embodiments.

In addition, functional units in the embodiments of the present disclosure may be integrated in one processing unit, or each unit may be physically separate, or two or more units may be integrated in one unit. The integrated units can be realized in a form of hardware, or in a form of hardware plus a software functional unit.

If the above-mentioned integrated unit is implemented in a form of a software functional unit and sold or used as an independent product, it can be stored in a computer-readable memory. Based on the understanding, the technical solution of the present disclosure is essentially or the part that contributes to the prior art or all or part of the technical solution can be embodied in the form of a software product. The computer software product is stored in a memory, including several instructions to enable a computer device (which may be a personal computer, a server or a TRP) to perform all or part of the steps of the various embodiments of the present disclosure. The memory includes a U disk, a Read-Only Memory (ROM), a Random Access Memory (RAM), a mobile hard disk drive, a diskette, a compact disc or other media that can store program codes.

The embodiments of the present disclosure are introduced in detail above. Specific examples are used in the application to illustrate principles and implementation methods of the present disclosure. The description of the above embodiments is only used to facilitate understanding the method and core idea of the present disclosure. Those skilled in the art can modify and vary the embodiments without departing from the spirit and scope of the present disclosure. In summary, it should be understood that the disclosure is presented by way of example only, and not limitation.

## Claims

1. A collaborative communication method, **characterized by** comprising:
receiving collaborative bearer configuration information, wherein the collaborative bearer configuration information indicates a configuration for a target collaborative User Equipment (UE) bearing collaborative data; and
collaborating with the target collaborative UE based on the collaborative bearer configuration information to communicate with an access network device.

2. The method according to claim 1, wherein said receiving the collaborative bearer configuration information comprises:
receiving the collaborative bearer configuration information sent by the access network device; and/or
receiving the collaborative bearer configuration information forwarded by the target collaborative UE, wherein the collaborative bearer configuration information is sent from the access network device to the target collaborative UE.

3. The method according to claim 1, wherein said collaborating with the target collaborative UE based on the collaborative bearer configuration information to communicate with the access network device comprises:
for uplink data transmission, transmitting uplink collaborative data to the target collaborative UE based on the collaborative bearer configuration information, wherein the target collaborative UE transmits the uplink collaborative data; and
for downlink data reception, receiving downlink non-collaborative data sent by the access network device and receiving downlink collaborative data sent by the target collaborative UE based on the collaborative bearer configuration information, wherein the downlink collaborative data is delivered from the access network device to the target collaborative UE.

4. The method according to any one of claims 1 to 3, wherein the collaborative bearer configuration information comprises at least one of the following:
an identity of a collaborative bearer;
a master bearer corresponding to the collaborative bearer;
identity information of the target collaborative UE;
identity information of a master UE; or
a data direction for collaborative transmission.

5. The method according to claim 1, wherein prior to said receiving the collaborative bearer configuration information, the method further comprises:
reporting auxiliary information, wherein the auxiliary information is used to request collaborative transmission and generate the collaborative bearer configuration information.

6. The method according to claim 5, wherein said reporting the auxiliary information comprises:
reporting the auxiliary information to the access network device; and/or,
transmitting the auxiliary information to the target collaborative UE, wherein the auxiliary information is reported to the access network device by the target collaborative UE.

7. The method according to claim 5 or 6, wherein the auxiliary information comprises at least one of the following:
a collaborative data transmission request;
an identity of a service for requesting collaborative transmission;
a service quality parameter of data for requesting collaborative transmission; or
a direction of data for requesting collaborative transmission.

8. The method according to any one of claims 1 to 7, further comprising:
determining the target collaborative UE.

9. The method according to claim 8, wherein said determining the target collaborative UE comprises:
acquiring candidate collaborative UEs; and
selecting the target collaborative UE from the candidate collaborative UEs.

10. The method according to claim 9, wherein following determining the target collaborative UE, the method further comprises:
transmitting identity information of the target collaborative UE to the access network device.

11. The method according to claim 9, wherein said selecting the target collaborative UE from the candidate collaborative UEs comprises:
selecting a candidate collaborative UE whose signal quality reaches a preset threshold as the target collaborative UE; and/or,
selecting a candidate collaborative UE whose current load is lower than a preset load value as the target collaborative UE.

12. The method according to any one of claims 9 to 11, wherein said acquiring the candidate collaborative UEs comprises:
receiving identity information of the candidate collaborative UEs from a core network device.

13. A collaborative communication method, **characterized by** comprising:
delivering collaborative bearer configuration information to make a master User Equipment (UE) perform collaborative communication with a target collaborative UE based on the collaborative bearer configuration information to send and receive collaborative data, wherein the collaborative bearer configuration information indicates a configuration for the target collaborative UE bearing collaborative data.

14. The method according to claim 13, wherein said delivering collaborative bearer configuration information comprises:
delivering the collaborative bearer configuration information to the master UE; and/or,
transmitting the collaborative bearer configuration information to the target collaborative UE, wherein the collaborative bearer configuration information is transmitted to the master UE by the target collaborative UE.

15. The method according to claim 13 or 14, wherein the collaborative bearer configuration information comprises at least one of the following:
an identity of a collaborative bearer;
a master bearer corresponding to the collaborative bearer;
identity information of the target collaborative UE;
identity information of the master UE; or
a data direction for collaborative transmission.

16. The method according to claim 13, wherein prior to said delivering the collaborative bearer configuration information, the method further comprises:
receiving auxiliary information; and
receiving the collaborative bearer configuration information corresponding to the auxiliary information.

17. The method according to claim 16, wherein said receiving the auxiliary information comprises:
receiving the auxiliary information reported by the master UE; and/or,
receiving the auxiliary information reported by the target collaborative UE.

18. The method according to claim 16 or 17, wherein the auxiliary information comprises at least one of the following:
a collaborative data transmission request;
an identity of a service for requesting collaborative transmission;
a service quality parameter of data for requesting collaborative transmission; or
a direction of data for requesting collaborative transmission.

19. The method according to any one of claims 13 to 18, further comprising:
determining the target collaborative UE.

20. The method according to claim 19, wherein said determining the target collaborative UE comprises:
acquiring candidate collaborative UEs; and
selecting the target collaborative UE from the candidate collaborative UEs.

21. The method according to claim 20, wherein said selecting the target collaborative UE from the candidate collaborative UEs comprises:
selecting a candidate collaborative UE whose signal quality reaches a preset threshold as the target collaborative UE; and/or,
selecting a candidate collaborative UE whose current load is lower than a preset load value as the target collaborative UE.

22. The method according to claim 20 or 21, wherein said acquiring the candidate collaborative UEs comprises:
receiving identity information of the candidate collaborative UEs from a core network device.

23. A collaborative communication apparatus, **characterized by** comprising:
a reception circuitry configured to receive collaborative bearer configuration information, wherein the collaborative bearer configuration information indicates a configuration for a target collaborative User Equipment (UE) bearing collaborative data; and
a collaborative communication circuitry configured to collaborate with the target collaborative UE based on the collaborative bearer configuration information to communicate with an access network device.

24. A collaborative communication apparatus, **characterized by** comprising:
a delivering circuitry configured to deliver collaborative bearer configuration information to make a master User Equipment (UE) perform collaborative communication with a target collaborative UE based on the collaborative bearer configuration information to send and receive collaborative data, wherein the collaborative bearer configuration information indicates a configuration for the target collaborative UE bearing collaborative data.

25. A non-volatile or non-transitory computer-readable storage medium having computer instructions stored therein, **characterized in that** when the computer instructions are executed by a processor, the method of any one of claims 1 to 22 is performed.

26. A collaborative communication apparatus comprising a memory and a processor, **characterized in that** the memory has computer instructions stored therein, and when the processor executes the computer instructions, the method of any one of claims 1 to 12 or the method of any one of claims 13 to 22 is performed.
